Europäisches Patentamt

**European Patent Office**

**Office européen des brevets**

(19)

(11) Veröffentlichungsnummer: **0 172 805**
**B1**

(12) **EUROPÄISCHE PATENTSCHRIFT**

(45) Veröffentlichungstag der Patentschrift:
05.08.87

(51) Int. Cl.⁴: **F 16 H 47/06, F 16 H 37/02**

(21) Anmeldenummer: **83901917.1**

(22) Anmeldetag: **28.05.83**

(86) Internationale Anmeldenummer:
**PCT/EP 83/00134**

(87) Internationale Veröffentlichungsnummer:
**WO 84/04144 (25.10.84 Gazette 84/25)**

(54) **STUFENLOS VERSTELLBARES VERBUNDGETRIEBE.**

(30) Priorität: **13.04.83 PC /DE83/000 53**

(43) Veröffentlichungstag der Anmeldung:
**05.03.86 Patentblatt 86/10**

(45) Bekanntmachung des Hinweises auf die Patenterteilung:
**05.08.87 Patentblatt 87/32**

(84) Benannte Vertragsstaaten:
**DE FR GB NL SE**

(56) Entgegenhaltungen:
**EP - A - 0 061 736**
**DE - A - 2 947 658**
**FR - A - 743 184**
**GB - A - 2 058 251**
**US - A - 4 125 037**

(73) Patentinhaber: **ZAHNRADFABRIK FRIEDRICHSHAFEN AKTIENGESELLSCHAFT, Löwentaler Strasse 100 Postfach 2520, D-7990 Friedrichshafen 1 (DE)**

(72) Erfinder: **DACH, Hansjörg, Pfauenweg 7, D-7990 Friedrichshafen 5 (DE)**
Erfinder: **SCHACHMANN, Karlheinz, Rebhalde 6/2, D-7990 Friedrichshafen 24 (DE)**
Erfinder: **OTT, Anton, Untere Jasminstaffel 7, D-7993 Tettnang (DE)**

(74) Vertreter: **Raue, Reimund, Zahnradfabrik Friedrichshafen AG Löwentaler Strasse 100 Postfach 2520, D-7990 Friedrichshafen 1 (DE)**

# Beschreibung

Diese Erfindung betrifft ein stufenlos verstellbares Verbundgetriebe nach dem Oberbegriff von Anspruch 1, das sowohl automatisch wie auch als Handschaltgetriebe ausgelegt sein kann. Das mechanisch stufenlose Getriebe ist z. B. als ein Kegelscheiben-Umschlingungsgetriebe verwirklicht.

Solche Getriebe sind aus der DE-OS 29 47 658 und aus der US-PS 41 25 037 bekannt. In beiden Druckschriften ist eine Getriebeeingangswelle mit dem Pumpenrad einer hydrodynamischen Einheit fest verbunden und kann auch über eine Überbrückungskupplung wirkungsmässig mit der Antriebswelle eines Kegelscheiben-Umschlingungsgetriebes verbunden werden. Der Abtriebswelle des Umschlingungsgetriebes ist noch ein Fahrtrichtungswechselgetriebe nachgeordnet, um über eine Schiebemuffe eine Zahnkupplung und Zahnräder bzw. über eine zweite Zahnkupplung und Zahnräder mit Zwischenrad auf die Abtriebswelle bzw. auf ein Differential zur Vorwärts- bzw. Rückwärtsfahrt mumschalten zu können. Für diese Umschaltung ist noch eine Trennkupplung zwischen dem Antriebsmotor (vorrangig der Turbine) und der Antriebswelle des mechanischen, stufenlosen Getriebes angeordnet, um den vom Motor kommenden Antriebsstrang während des Reversierschaltens zu unterbrechen.

Solche Getriebe bauen sehr gross und schwer und insbesondere die Regelung ist sehr kompliziert, die vielen Teile haben ein zu hohes Gewicht und die Herstellung ist mit einem hohen Aufwand verbunden.

Es ist deshalb Aufgabe der Erfindung, ein Verbundgetriebe nach dem Oberbegriff von Anspruch 1 zu vereinfachen und leichter auszuführen und die Bauteile möglichst für alle Funktionen eines solchen Getriebes optimal und mehrfach zu nutzen. Diese Aufgabe wird mit den kennzeichnenden Merkmalen von Anspruch 1 erfüllt.

Während bei den obengenannten Schriften die hydrodynamische Einheit in bekannter Weise als Anfahrhilfe und für die Drehmomentwandlung benutzt wird und für die Drehrichtungsumkehr ein gesondertes Getriebe notwendig ist, erfolgt die Drehmomentwandlung nach der Erfindung im mechanischen, stufenlosen Getriebe, z. B. in dem Umschlingungsgetriebe, und die hydrodynamische Einheit wird noch für die Drehrichtungsumkehr benützt und das gesonderte Wendegetriebe ist nicht mehr erforderlich.

Die Funktion der Turbine, die nahe der Getriebeeingangswelle, aber auch in axialer Richtung gesehen nahe dem z. B. Umschlingungsgetriebe angeordnet sein kann, wird zwischen dem Vorwärtsanfahrbereich — wirkt als Turbine — und dem Rückwärtsanfahr- und -fahrbereich — wirkt infolge der Abstützung am Gehäuse als Leitrad — verändert.

Infolge der Verbindung des Leitrades, das radial innen angebracht ist mit der Antriebswelle des mechanischen, stufenlosen Getriebes, wirkt dieses in beiden genannten Anfahrrichtungen im Prinzip als Turbine, so dass im Vorwärtsfahrbereich die hydrodynamische Einheit als hydrodynamische Kupplung wirkt.

Während nach dem Stand der Technik, wie bei allen Gangschaltgetrieben bekannt, die hydrodynamische Einheit mit dem Leitrad über einen Freilauf am Gehäuse abgestützt ist, wird beim Erfindungsgegenstand diese abgewandelt und auch mehrfach genutzt. Die Wirkungsgradprobleme eines Drehmomentwandlers haben im Zusammenhang mit dem mechanischen, stufenlosen Getriebe und der Tatsache, dass im grössten Teil des Vorwärtsfahrbereiches der Wandler überbrückt ist, nur eine untergeordnete Bedeutung.

In den Ansprüchen 2 bis 14 wird die Erfindung besonders vorteilhaft ausgestaltet.

Das Leitrad kann nach den Ansprüchen 3 bis 5 mit der Antriebswelle des mechanischen, stufenlosen Getriebes drehfest, aber auch über einen Freilauf oder eine Kupplung verbunden werden, wobei insbesondere die drehfeste Verbindung sehr einfach ist, weil keinerlei Betätigungseinrichtungen erforderlich sind.

Eine nachteilige Wirkung in den beiden Vorwärtsfahrbereichen tritt nicht ein, weil in einem Fall nur die Turbine vergrössert wird und im überbrückten Bereich die gesamte hydrodynamische Einheit als Block umläuft.

Die Ausgestaltung der Steuerung für die Überbrückungskupplung und das z. B. Umschlingungsgetriebe nach den Ansprüchen 6 bis 8 ist infolge der günstigen Rückwärtsfahrlösung in sehr einfacher Weise möglich.

Werden nach Anspruch 9 mit einer Synchronisiereinrichtung versehene Klauenkupplungen angeordnet, ist eine weitere Vereinfachung möglich, wobei diese sich besonders vorteilhaft ergibt, wenn das stufenlos verstellbare Verbundgetriebe als Handschaltgetriebe ausgelegt ist.

Die vor dem mechanisch stufenlosen Getriebe nach Anspruch 10 angeordnete Dämpfeinrichtung ist besonders im Vorwärtsfahrbereich beim überbrückten Wandler von Vorteil, weil harte Stösse auf das z. B. Umschlingungsgetriebe damit vermieden werden können, die ein solches Getriebe in bezug auf Lebensdauer ungünstig beeinflussen. Die günstige Anordnung der hydrodynamischen Einheit in Verbindung mit den Kupplungen und dem mechanisch stufenlosen Getriebe ermöglicht nach Anspruch 11 noch eine verschleissfreie Strömungsbremse, ohne dass dafür zusätzliche Bauteile benötigt werden.

Das Lösungsprinzip lässt auch im Zusammenhang mit den Erfordernissen und den konstruktiven Ausgestaltungen viele Möglichkeiten zu, so dass die günstigste Lösung zwischen den Anforderungen und den Ausführungen nach den Ansprüchen 12 bis 14 verwirklicht werden kann. Werden, wie z. B. nach Anspruch 14 vorgesehen, die Turbine mit verkleinerten und das Leitrad mit vergrösserten Radienverhältnissen ausgeführt, ergibt dies eine bessere (steifere) Kennlinie (in Zusammenarbeit mit dem Motor) für das im Rückwärtsgang rückwärts drehende Leitrad.

Eine günstige Anordnung der Kupplung und Bremse zueinander, wie auch zu den Teilgetrieben

—als Beispiel die Anordnung zwischen den Teilgetrieben mit einem gemeinsamen Innenlamellenträger — führt zu einer weiteren Vereinfachung.

Aus der DE-AS 10 69 001 ist zwar ein Strömungswandler bekannt, der zur Erzielung eines Rückwärtsganges herangezogen ist. Dem Strömungswandler ist aber kein mechanisches, stufenloses Getriebe, sondern ein Planetenradgetriebe nachgeschaltet, und der Rückwärtsgang wird durch das gemeinsame Festhalten des Hohlrades vom ersten Radzug des Planetengetriebes sowie des Sonnenrades erzielt. Die Drehmomentwandlung erfolgt auch ausschliesslich im Strömungswandler, der notwendigerweise nur für die Vorwärtsfahrt optimiert ist. Trotz eingeschalteter Kupplung im 2. Gang ist der Strömungswandler auch nicht überbrückt, sondern über Leistungsteilung an der Übertragung des Motormomentes — Antrieb am Hohl- und Sonnenrad des ersten Radsatzes vom Planetengetriebe — beteiligt.

Weiter ist aus der FR-A 743 184 eine hydrodynamische Einheit bekannt, mit welcher die Drehrichtung umgekehrt werden kann. Durch die Anordnung von einer grossen Menge von Kupplungen und Bremsen und deren unterschiedliche Schliessung ist es möglich, sowohl verschiedene Wandlerübersetzungen wie auch die Drehzahlumkehr zu erzielen. So kann die Drehzahlumkehr durch Schliessung der Bremse am Leitrad und der Kupplungen zwischen Antriebswelle und Pumpe und Turbine und Abtriebswelle erreicht werden.

Die hydrodynamische Einheit ist mit keinem mechanischen Getriebe verbunden und ein praktisch begehbarer Weg in Richtung des Anmeldegegenstandes wird nicht aufgezeigt.

Weitere Einzelheiten der Erfindung werden anhand von Ausführungsbeispielen und von Zeichnungen erläutert, wobei die Einzelheiten der Zeichnung Gegenstand der Erfindung sind. Es zeigen:

Fig. 1 ein stufenlos verstellbares Verbundgetriebe mit einer dreiteiligen, hydrodynamischen Einheit und einem mechanisch stufenlosen Getriebe in schematischer Darstellung.

Fig. 2 ein stufenlos verstellbares Verbundgetriebe nach Fig. 1 im Halbschnitt schematisch dargestellt mit einer anderen Anordnung des Pumpen- und Turbinenrades und mit einem Freilauf am Leitrad.

Fig. 3 ein stufenlos verstellbares Verbundgetriebe nach Fig. 2 mit einer anderen Lagerung der Turbine und mit Kupplungen am Leitrad.

Fig. 4 einen Ausschnitt aus Fig. 1 in bezug auf die dreiteilige, hydrodynamische Einheit, jedoch mit nicht symmetrisch angeordneten Radienverhältnissen zwischen Pumpe und Turbine.

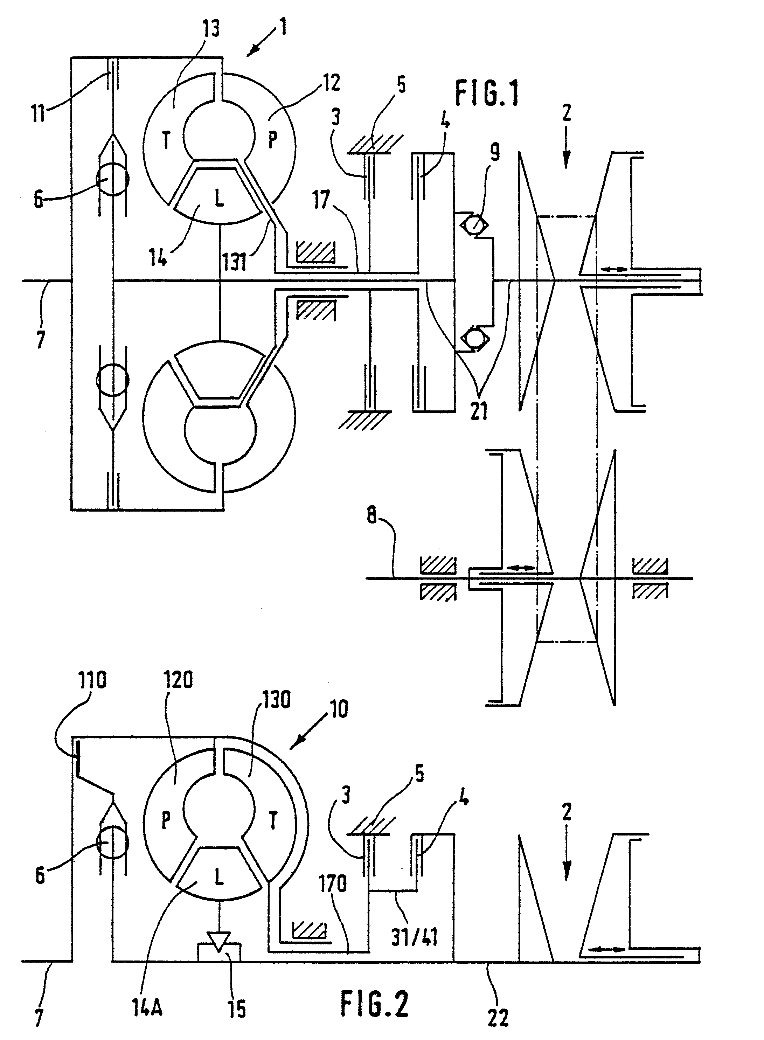

Das in Fig. 1 dargestellte, stufenlose Verbundgetriebe hat eine dreiteilige, hydrodynamische Einheit 1, deren Pumpenrad 12 über eine Getriebeeingangswelle 7 angetrieben wird. Mit einer Überbrückungskupplung 11 kann die Eingangswelle 7 über einen in Umfangsrichtung wirkenden Dämpfer 6 direkt mit der Antriebswelle 21 des mechanisch stufenlosen Getriebes 2, z. B. eines Umschlingungsgetriebes verbunden werden. Das Antriebsmoment wird über eine Ausgangswelle 8, evtl. über ein Konstantgetriebe, auf ein Differentialgetriebe übertragen.

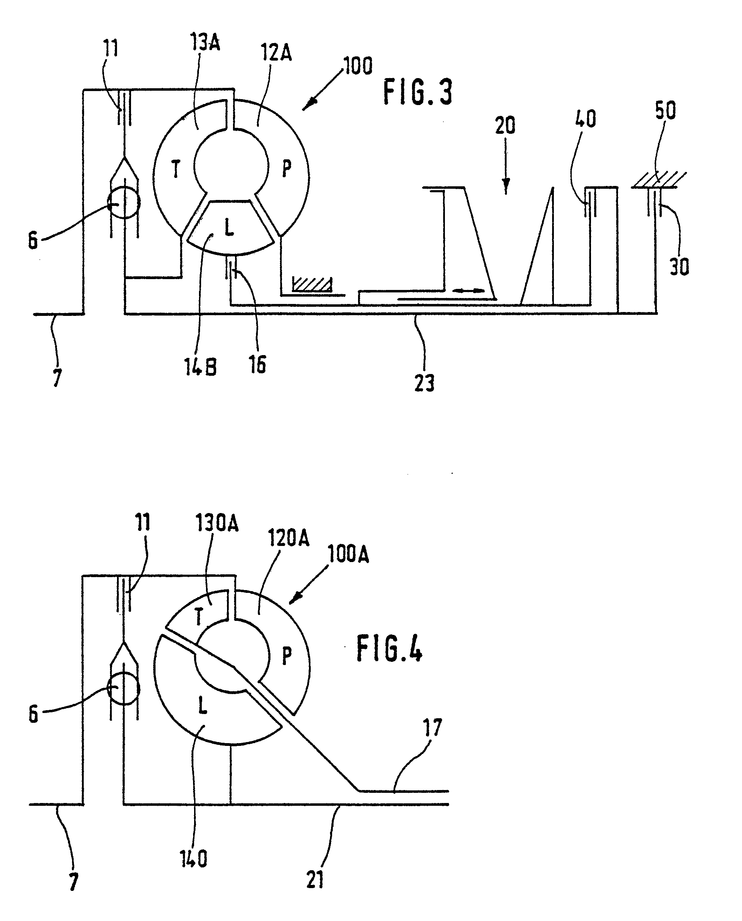

Die dreiteilige, hydrodynamische Einheit 1 ist ähnlich wie ein Trilokwandler aufgebaut, jedoch das Leitrad 14 ist nicht, wie allgemein bekannt, über eine Einwegkupplung am Gehäuse abgestützt, sondern mit der Antriebswelle 21 des Umschlingungsgetriebes 2 fest verbunden. Auch die Turbine 13 ist abweichend vom Aufbau eines Trilokwandlers über ein Speichenrad 131, das zwischen Leitrad 14 und Pumpenrad 12 hindurchgeführt ist, mit einer inneren Welle 17 verbunden, wobei diese wahlweise über eine Bremse 3 mit dem Gehäuse 5 oder über eine Kupplung 4 mit der Antriebswelle 21 für das Umschlingungsgetriebe 2 verbunden werden kann. Die Kupplung 4 und die Bremse 3 können dabei in axialer Richtung zwischen der hydrodynamischen Einheit 1 und dem Umschlingungsgetriebe 2 (Fig. 1 und 2), aber auch hinter diesem angeordnet sein (Fig. 3). Ein Drehmomentgeber 9 ist z. B. noch in der Antriebswelle 21 angeordnet.

In Fig. 2 ist in der hydrodynamischen Einheit 10 die Anordnung des Pumpenrades 120 und Turbinenrades 130 vertauscht, so dass sich die Verbindung des Turbinenrades 130 mit der inneren Welle 170 günstiger gestaltet. Das Leitrad 14A ist dabei über eine Einwegkupplung 15 (Freilauf) mit der Antriebswelle 22 für das Umschlingungsgetriebe 2 verbunden und die Innenlamellen der Kupplung 3 und Bremse 4 sind auf einem gemeinsamen Lamellenträger 31/41 angeordnet, wobei z. B. auch die Innenlamellen der Bremse und die Aussenlamellen der Kupplung auf einem gemeinsamen Lamellenträger angeordnet sein könnten. In Fig. 3 ist das Leitrad 14B mit der Antriebswelle 23 für das Umschlingungsgetriebe 20 über eine Kupplung 16 verbindbar und die Kupplung 40 und die Bremse 30 sind, in axialer Richtung gesehen, hinter dem Umschlingungsgetriebe angeordnet.

In der schematischen Darstellung der dreiteiligen, hydrodynamischen Einheit nach Fig. 4 ist die Turbine 130A mit verkleinerten und das Leitrad 140 mit vergrösserten Radienverhältnissen schematisch dargestellt.

Beim Anfahren ist das Umschlingungsgetriebe 2, 20 in seine höchste Übersetzung verstellt und zum Vorwärtsanfahren ist die Getriebeeingangswelle 7 nur mit dem Pumpenrad 12, 12A, 120, 120A und die Turbine 13, 13A, 130, 130A und das Leitrad 14, 14A, 14B, 140 über die Kupplung 4, 40 mi der Antriebswelle 21, 22, 23 für das mechanische, stufenlose Getriebe 2, 20 verbunden. Das Leitrad 14 wirkt dabei infolge seiner Verbindung, die fest oder über eine Kupplung 16 oder auch eine Einwegkupplung 15 hergestellt werden kann, als zweite Turbine.

Bei einer relativ geringen Drehzahl vom Antriebsmotor wird im Vorwärtsfahrbereich die Getriebeeingangswelle 7 über die Überbrückungskupplung 11, 110 und die in Umfangsrichtung wirkende Dämpfeinrichtung 6 mit der Antriebswelle 21, 22, 23 für das mechanische, stufenlose Getriebe 2, 20 direkt verbunden. Die hydrodynamische Einheit ist damit nicht wirksam und läuft als Block um. Drehzahl- und Motormomentanpassung erfolgen also ausschliesslich über das mechanische, stufenlose Getriebe.

Im Rückwärtsanfahr- und auch -fahrbereich ist die Getriebeeingangswelle 7 nur mit dem Pumpenrad 12 und das Leitrad 14 mit der Antriebswelle 21 für das mechanisch stufenlose Getriebe 2 verbunden. Das Turbinenrad wird über die geschaltete Bremse 3 am Gehäuse 5 festgehalten, so dass das Leit- als Turbinenrad und das Turbinenals Leitrad wirken.

Wird zu dieser Rückwärtsschaltanordnung noch die Überbrückungskupplung 11, 110 geschlossen, so drehen Leit- und Pumpenrad gemeinsam und wirken in Verbindung mit dem festgehaltenen Turbinenrad als verschleissfreie Strömungsbremse.

In der nachfolgenden Tabelle sind die jedem Fahrzustand zugeordneten, geschalteten Kupplungen und Bremsen in einfacher Weise erkennbar.

|  | Kupplung 4 | Bremse 3 | Überbrückungs-kupplung 11, 110 | Einwegkupp-lung 15 |
|---|---|---|---|---|
| Vorwärts anfahren | × |  |  | ⊗ |
| Vorwärts fahren | × |  | × | ⊗ |
| Rückwärts anfahren und fahren |  | × |  | × |
| Verschleissfrei bremsen |  | × | × | × |

⊗ = kann, aber muss nicht geschaltet sein

Mit der festen Verbindung des Leitrades bzw. der Abstützung mit einer Einwegkupplung 15 gegenüber einer evtl. geöffneten Kupplung 16 in dem Vorwärtsanfahr- und -fahrbereich wird lediglich die Leistungsaufnahmecharakteristik verändert.

*Bezugszeichen*

| 1, 10, 100, 100A | Hydrodynamische Einheit |
|---|---|
| 11, 110 | Überbrückungskupplung |
| 12, 12A, 120, 120A | Pumpenrad |
| 13, 13A, 130, 130A | Turbinenrad |
| 131 | Speichenrad |
| 14, 14A, 14B, 140 | Leitrad |
| 15 | Einwegkupplung (Freilauf) |
| 16 | Kupplung |
| 17, 170 | Innere Welle |
| 2, 20 | Mechanisches, stufenloses Getriebe (Umschlingungsgetriebe) |
| 21 | Antriebswelle |
| 22 | Antriebswelle |
| 23 | Antriebswelle |
| 3, 30 | Bremse |
| 4, 40 | Kupplung |
| 31 / 41 | Lamellenträger |
| 5, 50 | Gehäuse |
| 6 | Dämpfeinrichtung |
| 7 | Getriebeeingangswelle |
| 8 | Getriebeausgangswelle |
| 9 | Drehmomentgeber |

**Patentansprüche**

1. Stufenlos verstellbares Verbundgetriebe mit einer mindestens dreiteiligen, hydrodynamischen Einheit (1, 10, 100, 100A) mit zugeordneter Überbrückungskupplung (11, 110) und einem mechanischen, stufenlosen Getriebe (2, 20) sowie mit Einrichtungen für die Vor- und Rückwärtsfahrt und einer Kupplung (4, 40) zwischen hydrodynamischer Einheit (1, 10, 100, 100A) und mechanischem, stufenlosen Getriebe (2, 20), dadurch gekennzeichnet, dass die veränderliche Drehmomentwandlung im Vorwärtsfahrbereich durch das mechanisch stufenlose Getriebe (2, 20) erfolgt und die Drehrichtungsumkehr für die Vor- und Rückwärtsfahrt durch die hydrodynamische Einheit (1, 10, 100, 100A) bewirkt wird.

2. Stufenlos verstellbares Verbundgetriebe nach Anspruch 1, dadurch gekennzeichnet, dass die Antriebswelle (21, 22, 23) des mechanischen, stufenlosen Getriebes (2, 20) mit dem Leitrad (14, 14A, 14B, 140) verbunden ist und die Turbine (13, 130, 130A) wahlweise über eine Bremse (3, 30) mit dem Gehäuse (5) oder über eine Kupplung (4, 40) mit dieser Antriebswelle des mechanischen, stufenlosen Getriebes (2, 20) verbindbar ist.

3. Stufenlos verstellbares Verbundgetriebe nach Anspruch 2, dadurch gekennzeichnet, dass das Leitrad (14, 140) drehfest auf der Antriebswelle (21) für das mechanisch stufenlose Getriebe (2) angeordnet ist.

4. Stufenlos verstellbares Verbundgetriebe nach Anspruch 2, dadurch gekennzeichnet, dass das Leitrad (14A) über eine Einwegkupplung (15) mit der Antriebswelle (22) für das mechanisch stufenlose Getriebe (2) verbunden ist.

5. Stufenlos verstellbares Verbundgetriebe nach Anspruch 2, dadurch gekennzeichnet, dass das Leitrad (14B) über eine Kupplung (16) mit der Antriebswelle (23) für das mechanisch stufenlose Getriebe (20) verbunden ist.

6. Stufenlos verstellbares Verbundgetriebe nach einem der vorgenannten Ansprüche, dadurch gekennzeichnet, dass die Steuerung der Überbrückungskupplung (11, 110) drehzahlabhängig erfolgt und dass im Rückwärtsfahrbereich die Schaltung der Überbrückungskupplung unterdrückt wird.

7. Stufenlos verstellbares Verbundgetriebe nach Anspruch 6, dadurch gekennzeichnet, dass die Steuerung der Überbrückungskupplung (11, 110) drehmomentabhängig beeinflusst wird.

8. Stufenlos verstellbares Verbundgetriebe nach einem der vorgenannten Ansprüche, dadurch gekennzeichnet, dass im Vorwärts- und im Rückwärtsanfahrbereich das mechanisch stufenlose Getriebe (2, 20) sich in der Stellung für eine maximale Drehmomentübersetzung befindet.

9. Stufenlos verstellbares Verbundgetriebe nach einem der vorgenannten Ansprüche, dadurch gekennzeichnet, dass die Schaltkupplungen und/oder Bremsen als Klauenkupplungen mit Synchronisiereinrichtung ausgeführt sind.

10. Stufenlos verstellbares Verbundgetriebe nach einem der vorgenannten Ansprüche, dadurch gekennzeichnet, dass vor der Antriebswelle (21, 22, 23) für das mechanische, stufenlose Getriebe (2, 20) eine in Umfangsrichtung wirkende Dämpfenrichtung (6) angeordnet ist.

11. Stufenlos verstellbares Verbundgetriebe nach einem der vorgenannten Ansprüche, dadurch gekennzeichnet, dass die Getriebeeingangswelle (7) über die Überbrückungskupplung (11, 110) und das Leitrad (14, 14A, 14B, 140) mit der Antriebswelle (21, 22, 23) für das mechanische, stufenlose Getriebe (2, 20) verbunden sind und Pumpen (12, 120, 120A) – und Leitrad (14, 14A, 14B, 140) – gemeinsam drehen und das Turbinenrad (13, 130, 130A) über die Bremse (3, 30) festgehalten ist, so dass die hydrodynamische Einheit (1, 10, 100, 100A) als verschleissfreie Strömungsbremse wirkt.

12. Stufenlos verstellbares Verbundgetriebe nach einem der vorgenannten Ansprüche, dadurch gekennzeichnet, das die hydrodynamische Einheit (1) mit symmetrisch angeordneten Turbinen (13) und Pumpenrad (12) ausgeführt ist, wobei die Turbine nahe der Getriebeeingangswelle (7) angeordnet ist und in Form eines Speichenrades (131) zwischen dem Pumpen- und Leitrad hindurchgeführt wird.

13. Stufenlos verstellbares Verbundgetriebe nach einem der Ansprüche 1 bis 11, dadurch gekennzeichnet, dass in der hydrodynamischen Einheit (10) das Turbinenrad (130) in axialer Richtung gesehen zwischen dem Pumpenrad (120) und dem mechanischen, stufenlosen Getriebe (2) angeordnet ist und Pumpen- und Turbinenrad symmetrisch ausgeführt sind.

14. Stufenlos verstellbares Verbundgetriebe nach einem der vorgenannten Ansprüche, dadurch gekennzeichnet, dass bei der hydrodynamischen Einheit (100A) die Turbine (130A) und das Leitrad (140) mit ihren Radienverhältnissen so ausgelegt sind, dass sich bei Vorwäts- und Rückwärtsfahrt etwa gleiche Momente ergeben.

15. Stufenlos verstellbares Verbundgetriebe nach einem der vorgenannten Ansprüche, dadurch gekennzeichnet, dass ein Lamellenträger (31/41) der Kupplung (4, 40) mit einer Bremse (3, 30) einstückig ausgeführt ist.

## Claims

1. Infinitely variable composite gear with a hydro-dynamic unit (1, 10, 100, 100A), consisting of at least three parts, with an allocated lock-up clutch (11, 110) and a continuously variable mechanical transmission (2, 20) in addition to a device for forward and reverse operation and a clutch (4, 40) between a hydro-dynamic unit (1, 10, 100, 100A) and a continuously variable mechanical transmission (2, 20), characterized in that the variable torque conversion in forward operation is effected by continuously variable mechanical transmission (2, 20) and that the reversal of torque direction for forward and reverse operation is effected by the hydro-dynamic unit (1, 10, 100, 100A).

2. Infinitely variable composite gear according to Claim 1, characterized in that the input shaft (21, 22, 23) of the continuously variable mechanical transmission (2, 20) is combined with the stator (14, 14A, 14B, 140), and the turbine (13, 130, 130A) can be connected either via a brake (3, 30) with housing (5) or via a clutch (4, 40) to this input shaft of the continuously variable mechanical transmission (2, 20).

3. Infinitely variable composite gear according to Claim 2, characterized in that the stator (14, 140) is arranged non-rotatably on the input shaft (21) of the continuously variable mechanical transmission (2).

4. Infinitely variable composite gear according to Claim 2, characterized in that the stator (14A) is connected to the input shaft (22) of the con- tinously variable mechanical transmission (2) via a one-way clutch (15).

5. Infinitely variable composite gear according to Claim 2, characterized in that the stator (14B) is connected to the input shaft (23) of the continuously variable mechanical transmission (20) via a clutch (16).

6. Infinitely variable composite gear according to one of the above claims, characterized in that the control of the lock-up clutch (11, 110) is speed-dependent and in that the lock-up clutch control is overriden in reverse operation.

7. Infinitely variable composite gear according to Claim 6, characterized in that the control of the lock-up clutch (11, 110) is torque-dependent.

8. Infinitely variable composite gear according to one of the above claims, characterized in that forward and reverse operating ranges of the continuously variable mechanical transmission (2, 20) operate in the setting yielding highest torque ratio.

9. Infinitely variable composite gear according to one of the above claims, characterized in that the shift clutches and/or brakes are designed as dog clutches with synchronizer equipment.

10. Infinitely variable composite gear according to one of the above claims, characterized in that a damper device (6) acting in circumferential direction is arranged before the input shaft (21, 22, 23) of the continuously variable mechanical transmission (2, 20).

11. Infinitely variable composite gear according to one of the above claims, characterized in that the transmission drive shaft (7) is connected to the input shaft (21, 22, 23) of the continuously variable mechanical transmission (2, 20) via lock-up clutch (11, 110) and stator (14, 14A, 14B, 140) and that pumps (12, 120, 120A) and stator (14, 14A, 14B, 140) are rotated together and turbine wheel (13, 130, 130A) is held via brake (3, 30), so that the hydro-dynamic unit (1, 10, 100, 100A) functions as a non-wearing fluid brake.

12. Infinitely variable composite gear according to one of the above claims, characterized in that the hydro-dynamic unit (1) has a symmetrically arranged turbine (13) and pump wheel (12), with the turbine arranged close to the transmission drive shaft (7) and arranged between pump wheel and stator in the form of a spoked wheel (131).

13. Infinitely variable composite gear according to one of the Claims 1 to 11, characterized in that the turbine wheel (130) within the hydro-dynamic unit (10) is arranged between pump wheel (120) and the continuously variable mechanical transmission (2) viewed in axial direction, and in that pump and turbine wheels are shaped symmetrically.

14. Infinitely variable composite gear according to one of the above claims, characterized in that turbine (130A) and stator (140) of the hydro-dynamic unit (100A) have their radii so designed that approximately the same torques are generated for forward and reverse operations.

15. Infinitely variable composite gear according to one of the above claims, characterized in that a multi-disc carrier (31/41) of clutch (4, 40) is integrated with a brake (3, 30) as one piece.

## Revendications

1. Transmission combinée à réglage continu, comportant une unité hydrodynamique (1, 10, 100, 100A) à au moins trois éléments, dotée d'un embrayage de pontage (11, 110), et une transmission mécanique à variation continue (2, 20), ainsi que des dispositifs de marche avant et marche arrière et un embrayage (4, 40) entre l'unité hydrodynamique (1, 10, 100, 100A) et la transmission mécanique à variation continue (2, 20), caractérisée en ce que la conversion variable de couple en marche avant est effectuée au moyen de la transmission mécanique à variation continue (2, 20) et en ce que l'inversion du sens de rotation marche avant/marche arrière est effectuée au moyen de l'unité hydrodynamique (1, 10, 100, 100A).

2. Transmission selon la revendication 1, caractérisée en ce que l'arbre d'entraînement (21, 22, 23) de la transmission mécanique à variation continue (2, 20) est raccordé à la roue directrice (14, 14A, 14B, 140) et en ce que la turbine (13, 130, 130A) est agencée pour être raccordée de manière sélective avec le carter (5) au moyen d'un frein (3, 30), ou avec ledit arbre d'entraînement de la transmission mécanique à variation continue (2, 20) au moyen d'un embrayage (4, 40).

3. Transmission selon la revendication 2, caractérisée en ce que la roue directrice (14, 140) est montée solidaire en rotation sur l'arbre d'entraînement (21) de la transmission mécanique à variation continue (2).

4. Transmission selon la revendication 2, caractérisée en ce que la roue directrice (14A) est raccordée à l'arbre d'entraînement (22) de la transmission mécanique à variation continue (2) au moyen d'un embrayage à sens unique (15).

5. Transmission selon la revendication 2, caractérisée en ce que la roue directrice (14B) est raccordée à l'arbre d'entraînement (23) de la transmission mécanique à variation continue (20) au moyen d'un embrayage (16).

6. Transmission selon l'une des revendications précédentes, caractérisée en ce que la commande de l'embrayage de pontage (11, 110) dépend du régime de rotation et en ce que, en marche arrière, l'enclenchement de l'embrayage de pontage est neutralisé.

7. Transmission selon la revendication 6, caractérisée en ce que la commande de l'embrayage de pontage (11, 110) est modifiée en fonction du couple.

8. Transmission selon l'une des revendications précédentes, caractérisée en ce que, en régime de démarrage en avant ou en arrière, la transmission mécanique à variation continue (2, 20) se trouve en position de démultiplication maximale du couple.

9. Transmission selon l'une des revendications précédentes, caractérisée en ce que lesdits embrayages et/ou freins sont constitués par des accouplements à crabots avec dispositif de synchronisation.

10. Transmission selon l'une des revendications précédentes, caractérisée en ce qu'elle comporte, en amont de l'arbre d'entraînement (21, 22, 23) de la transmission mécanique à variation continue (2, 20), un dispositif amortisseur (6) agissant en direction circonférentielle.

11. Transmission selon l'une des revendications précédentes, caractérisée en ce que l'arbre d'entraînement (21, 22, 23) de la transmission mécanique à variation continue (2, 20) est raccordé à l'arbre primaire (7) de la transmission par l'embrayage de pontage (11, 110) et à la roue directrice (14, 14A, 14B, 140), en ce que la roue de pompe (12, 120, 120A) et la roue directrice (14, 14A, 14B, 140) tournent ensemble, et en ce que la roue de turbine (13, 130, 130A) est maintenue fixe par le frein (3, 30) de sorte que l'unité hydrodynamique (1, 10, 100, 100A) sert de ralentisseur hydraulique dépourvu d'usure.

12. Transmission selon l'une des revendications précédentes, caractérisée en ce que l'unité hydrodynamique (1) comporte une roue de turbine (13) et une roue de pompe (12) qui sont disposées symétriquement, la turbine étant disposée à proximité de l'arbre primaire (7) et ayant la forme d'une roue à rayons (131) qui passe entre la roue de pompe et la roue directrice.

13. Transmission selon l'une des revendications 1 à 11, caractérisée en ce que, dans l'unité hydrodynamique (10) vue en direction axiale, la roue de turbine (130) est disposée entre la roue de pompe (120) et la transmission mécanique à variation continue (2), et en ce que la roue de pompe et la roue de turbine sont symétriques.

14. Transmission selon l'une des revendications précédentes, caractérisée en ce que, dans l'unité hydrodynamique (100A), la turbine (130A) et la roue directrice (140) sont agencées, au point de vue de leurs rapports de rayons, de telle manière qu'il en résulte sensiblement les mêmes moments en marche avant et en marche arrière.

15. Transmission selon l'une des revendications précédentes, caractérisée en ce qu'un support de disque (31/41) de l'embrayage (4, 40) est réalisé d'une pièce avec un frein (3, 30).

**FIG.1**

**FIG.2**

FIG.3

FIG.4